# EUROPÄISCHE PATENTSCHRIFT

(11) **EP 1 106 309 B1**
(45) Veröffentlichungstag und Bekanntmachung des Hinweises auf die Patenterteilung: **28.04.2010**
(21) Anmeldenummer: 00126673.3
(22) Anmeldetag: 05.12.2000
(51) Int. Cl.: B25J 9/16, G05B 19/408

(54) **Verfahren und Vorrichtung zum Steuern eines Roboters**
Robot control method and device
Méthode et dispositif de commande de robot

(30) Priorität: 09.12.1999 DE 19959330
(43) Veröffentlichungstag der Anmeldung: 13.06.2001
(73) Patentinhaber: KUKA Roboter GmbH, 86165 Augsburg (DE)
(72) Erfinder: Born, Hans, 86159 Augsburg (DE); Bunsendahl, Jens, 86153 Augsburg (DE); Stelter, Johannes, 82205 Gilching (DE); Koeppe, Ralf, 82229 Seefeld (DE); Steinmetz, Bernhard-Michael, 93309 Kehlheim (DE)
(74) Vertreter: Lempert, Jost

(56) Entgegenhaltungen:
- WO-A-97/29408
- US-A- 4 670 974

## Beschreibung

Die Erfindung betrifft ein Verfahren und eine Vorrichtung zum Steuern eines Roboters aufgrund von Sensordaten von Sensoren mit diesen eigenen Sensordatenstrukturen.

Die US 4 670 974 betrifft ein einen Manipulator aufweisendes System zum Einsetzen von Windschutzscheiben in einem auf einem Förderband bewegten Fahrzeug. Das System weist eine Steuerungseinrichtung mit einer CPU sowie Eingängen auf. Darüber hinaus sind Sensoren in Form von Kameras vorgesehen, deren Sensordaten seriell an die CPU übertragen werden. Auf dieser läuft ein Steuerungsprogramm, wobei zwischen Steuerungsprogramm und Sensortreibern eine Bearbeitungseinrichtung zur Konvertierung der Sensordaten in Daten einer einheitlichen Datenstruktur angeordnet ist. Das Steuerprogramm muss derart ausgebildet sein, dass es diese Daten verarbeiten, zur Steuerung des Manipulators nutzen und demgemäß in Steuerungsdaten verwandeln kann.

Es ist bisher nur mit erheblichem Aufwand möglich - und dies gilt auch für vorstehenden Stand der Technik -, unterschiedliche Sensoren und Sensorgruppen bei einer Robotersteuerung einzusetzen. Unterschiedliche Sensoren nutzen zwar, ebenso wie die Robotersteuerung, weitgehend standardisierte Hardwareschnittstellen, doch weisen sie ihre eigenen, insbesondere unterschiedlichen, Datenstrukturen auf. Demgemäß muss die Robotersteuerung an unterschiedliche Datenformate, -strukturen, Übertragungsprotokolle und Übertragungsgeschwindigkeiten des jeweiligen Sensors angepasst werden. Darüber hinaus verfügen bekannte Robotersteuerungen meist nur über fest implementierte Eingriffsmöglichkeiten für Sensordaten auf das Roboterprogramm. Die Anpassung an neue Sensoren und die Schaffung neuer Wirkungsmechanismen kann nur vom Hersteller durchgeführt werden, was üblicherweise eine Modifikation der Systemsoftware erforderlich macht. Da solche Änderungen tief in die Systemprogramme eingreifen, sind umfangreiche Tests erforderlich, um die Sicherheit zu gewährleisten.

Anpassungen auf Anwenderebene unter Zuhilfenahme vorhandener Kommunikationsschnittstellen genügen meist nicht den Geschwindigkeitsanforderungen des zu beeinflussenden Prozesses. Bei der Anschaltung komplexer Sensoren wird deshalb häufig der Umweg über zusätzliche externe und kostspielige Rechnerhardware gewählt.

Bekannt sind z.B. fertig implementierte Software-Schnittstellen für visuelle Sensoren oder bahnverfolgende Sensoren. Solche Implementierungen sind jedoch meist auf bestimmte Sensortypen und -Fabrikate zugeschnitten und damit weder hinsichtlich des Protokolls noch hinsichtlich der Weiterverarbeitung der Daten flexibel.

Ausgehend hiervon liegt der Erfindung die Aufgabe zugrunde, ein Verfahren und eine Vorrichtung zum Steuern eines Roboters derart zu schaffen, dass ohne Eingriff in das eigentliche Steuerprogramm des Roboters eine Anpassung an unterschiedliche Sensoren und damit in einfacher Weise der Einsatz unterschiedlicher Sensoren möglich ist.

Erfindungsgemäß wird die genannte Aufgabe durch ein Verfahren gemäß des Anspruchs 1 und durch eine Vorrichtung nach dem Anspruch 9 gelöst.

Zur Erzielung der Möglichkeit einer flexiblen Zusammenarbeit einer Robotersteuerung, ausgestattet mit ihr eigenen standardmäßigen Hardwareschnittstellen, mit unterschiedlichen Sensoren, die zwar über Standard Hardwareschnittstellen verfügen, jedoch spezifische Daten in spezifischen Formaten liefern, sieht die Erfindung also vor, dass die Robotersteuerung durch Einführung einer anwenderkonfigurierbaren Sensordaten-Verarbeitungsschicht in die Lage versetzt wird, spezifische Sensordaten so zu verarbeiten, insbesondere zu normieren und zu konvertieren, dass diese nach Durchlaufen dieser Schicht vom Steuerungsprogramm ohne weiteres weiterverarbeitet werden können. Sensordaten können insbesondere in beliebiger Weise kombiniert und dann dem Systemprogramm zur Auslösung von Aktionen zugeführt werden.

Durch die erfindungsgemäß zwischen den Sensoren und dem Steuerprogramm des Roboters vorgesehene gesonderte Verarbeitungsschicht zur Bereitstellung vom Steuerprogramm verarbeitbaren, an dieses angepasste Steuerdaten wird der Einsatz verschiedenster Sensoren bei einem Roboter mit dem gleichen Steuer- oder Systemprogramm ermöglicht, ohne dass dieses als solches verändert werden muss; beim Einsatz unterschiedlicher Sensoren ist also kein Eingriff in das Steuerprogramm notwendig. Die Verarbeitung der Sensordaten kann modulartig aufgebaut sein, so dass eine leichte Konfiguration zur Anpassung an verschiedene Sensoren durch den Benutzer bzw. Anwender möglich ist. Insbesondere kann die Verarbeitung der Sensordaten vom Anwender durch die Vereinbarung, Verknüpfung und Parametrierung vordefinierter Funktionsblöcke konfiguriert werden. Die Verknüpfung und Parametrierung der Funktionsblöcke erfolgt dabei insbesondere so, dass die resultierende Struktur die Sicherheitsfunktionen des Systemprogrammes nicht beeinträchtigt. Weiter können derart die Strukturen während der Laufzeit einer Roboterapplikation durch ereignisgesteuerte Umschaltung geändert werden. Hierzu sieht die Erfindung in bevorzugter Weise vor, dass die Sensordaten in Kontrolldaten einheitlicher Datenstruktur konvertiert werden, dass die Kontrolldaten durch geeignete Verarbeitungsoperationen zu Aktuatordaten verarbeitet werden und dass die Aktuatordaten überprüft, gegebenenfalls begrenzt werden und als Robotersteuerdaten an das Steuerprogramm des Roboters übergeben werden. Da zur Steuerung eines Roboters nicht nur externe Sensordaten herangezogen werden, sondern auch interne Daten der Robotersteuerung selbst, schlägt die Erfindung in einer bevorzugten Ausgestaltung weiter vor, dass interne Daten der Robotersteuerung in Kontrolldaten mit einer einheitlichen Datenstruktur konvertiert werden, wobei Kontrolldatenstruktur mit der der externen Sensordaten identisch ist; die internen Daten werden so als Daten von Pseudosensoren dargestellt.

Verschiedene Sensoren können so in die Robotersteuerung auf einfache Weise eingebunden werden, ohne dass ein Eingriff in das eigentliche Steuerprogramm erforderlich ist, wodurch Sicherheitsrisiken minimiert und mit Änderungen verbundener Testaufwand reduziert wird. Die Erfindung ermöglicht es, vorhandene Schnittstellen von Sensoren und Programm zu nutzen.

Während der Takt der Verarbeitung (Lesetakt) grundsätzlich durch externe Ereignisse bestimmt sein kann, kann ein oder können mehrere interne Taktgeber (Timer) vorgesehen sein, wobei insbesondere bei Sensor-, Kontroll-, Aktuator und/oder Robotersteuerdaten eine Mittelung und/oder Filterung durchgeführt wird. Wenn eine spätere Verarbeitung mit einer geringeren Taktrate erfolgt, sieht eine bevorzugte Ausgestaltung vor, dass bei der Bearbeitung der Sensor-, Kontroll-, Aktuator und/oder Robotersteuerdaten eine Mittelung und/oder Filterung durchgeführt wird. Hierdurch wird eine wirksame Störunterdrückung erzielt.

In weiterer Ausgestaltung kann insbesondere vorgesehen sein, dass Sensordaten mehrerer Sensoren parallel verarbeitet werden und/oder dass mehrere Verarbeitungspfade zur parallelen Verarbeitung von Sensordaten eines Sensors mittels unterschiedlichen Auswertestrategien vorgesehen sind, wobei insbesondere die gemäß einer bestimmten Auswertestrategie gewonnenen Daten in Abhängigkeit bestimmter Ereignisse zum Einsatz durch das Steuerprogramm an dieses übergeben werden.

Der Betrieb eines Sensors mit mehreren Auswertestrategien ist besonders dann sinnvoll, wenn sich die Auswertestrategien so stark unterscheiden, dass sich die notwendigen Umschaltungen nicht mehr in einem Signalverarbeitungspfad realisieren lassen. In diesem Fall werden zwei oder mehrere voneinander unabhängige Strategien in getrennten Signalverarbeitungspfaden programmiert. Ein weiterer wichtiger Anwendungsfall für gezielt wählbare Strategien ist die Fehlerbehandlung, die verschiedene Vorgehensweisen wie z.B. Sensorinitialisierung, Programmstop, Aufruf neuer Programme oder Unterdrückung von Aktionen erfordert. Zur Auswahl einer Strategie werden der jeweils zugehörige Signalverarbeitungspfad aktiviert und die nicht benutzten deaktiviert. Zur Aktivierung können die angegebenen Ereignisse herangezogen werden:

Programmablauf, wie Start/Stop, Betriebsartenwechsel oder Programmbefehl. Variable, wie der Wert von Systemvariablen oder von Uservariablen. Schnittstellendaten, wie der Zustand von binären I/Os, analogen I/Os, seriellen Schnittstellen oder parallelen Schnittstellen.

Im Rahmen der Erfindung wird beispielsweise bei einer Reglereinrichtung aufgrund der erhaltenen Kontrolldaten ein Steuervorgang in Abhängigkeit von einer Bedingung durchgeführt.

Durch die Erfindung ist es möglich, Sensoren für unterschiedlichste Problemstellungen einzusetzen, z.B. Kraft-Momentensensoren, die Kontakte des Roboterarms an unerwünschten Stellen und/oder mit unzulässig hohen Kräften erfassen, so Sensoren, die aufgrund der Messung des Gewichts des Greifers feststellen, ob ein von diesem ergriffenes Objekt nach Öffnen und Rückgabe desselben am Greifer hängenbleibt. Es können weiterhin Sensoren eingesetzt werden, die ein Sortieren von Werkstücken nach ihrem Gewicht ermöglichen, wobei dies über Vorgabe von Schwellwerten geschieht. Andere einsetzbare Sensoren stellen durch kombinierte Weg- und Kraftmessung fest, ob ein Stecker und ein Gegenstück tatsächlich richtig und vollständig durch den Roboter ineinandergesteckt werden. Es können Sensoren zur Überwachung von Belastungstests, beispielsweise zur Prüfung von Klebestellen eingesetzt werden, die Kraft und Weg hinsichtlich des Überschreitens vorgegebener Schwellwerte überwachen. In gleicher Weise können Sensoren eingesetzt werden, die beispielsweise beim Einziehen von Kabeln die Zugkraft überwachen, wo ein Überschreiten derselben zu einer Beschädigung oder völligen Zerstörung des Kabels führen würde. Während bei diesem Fall eine Kraftüberwachung in Zugrichtung erforderlich ist, ist eine solche quer zur Bewegungsrichtung bei spanabhebenden Fertigungsverfahren sinnvoll, um konstante Schnittkräfte zu garantieren. Weitere Einsatzgebiete von Sensoren an einem Roboter sind das Verfolgen einer vorgegebenen Kontur, wie einer Nut.

Weitere Vorteile und Merkmale der Erfindung ergeben sich aus der nachfolgenden Beschreibung, in der ein Ausführungsbeispiel der Erfindung unter Bezugnahme auf die Zeichnung im einzelnen erläutert ist. Dabei zeigt bzw. zeigen:

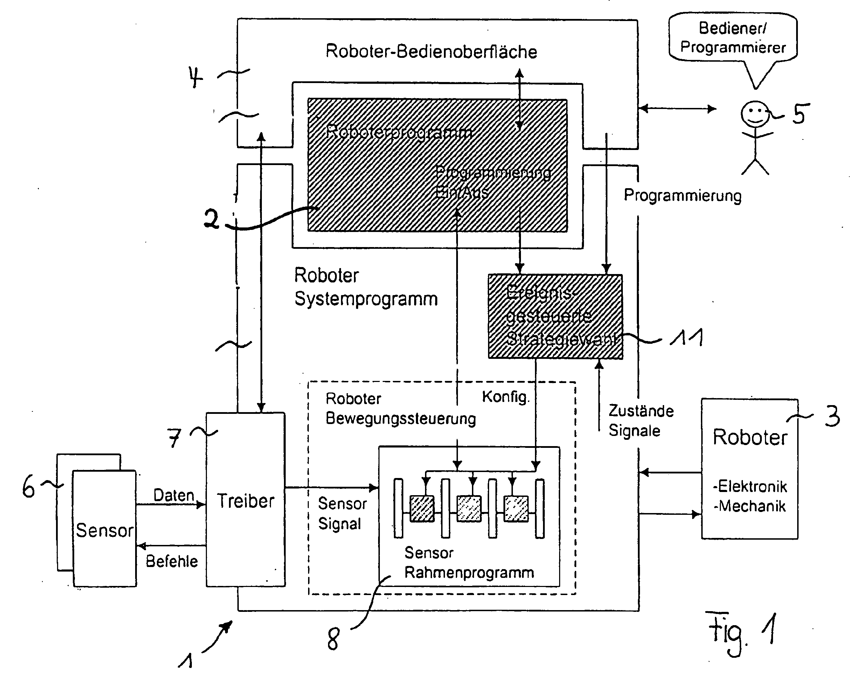

- Fig. 1.: die Einbindung einer die Erfindung umsetzenden Sensorprogramms in die gesamte Robotersteue- rungsoftware;
- Fig. 2.: eine schematische Darstellung einer erfin- dungsgemäßen Steuerung des Ablaufs der eines Roboters;
- Fig. 3.: ein Verarbeitungspfad für Sensordaten eines Sensors;
- Fig. 4.: eine vergrößerte schematische Darstellung der Reglereinrichtung mit ihren Angabefunktionen;
- Fig. 5.: eine schematische Darstellung eines Datenver- arbeitungsvorgangs in einer Reglereinrichtung.
- Fig. 6a-g: Bildschirmausdrucke zur Programmierung eines virtuellen Sensors über Inline-Formulare durch einen Benutzer;
- Fig. 7.: den Quellcode des gemäß der Abfolge der Figuren 6a bis 6g oder aber direkt durch einen Ex- perten erstellten einfachen Sensorprogramms; und
- Fig. 8.: die durch das Programm angelegte Struktur im Systemprogramm.

Kern einer Robotersteuerung 1 ist ein Roboter-System oder Steuer-Programm 2, das den Roboter 3 steuert. Das Steuer-programm 2 ist über eine Bedienoberfläche 4 von einem Anwender 5 bedienbar. Es erhält Eingangsdaten von Sensoren 6 über Treiber 7. Die Erfindung sieht nun vor, dass zwischen den Sensortreibern 7 und dem Steuerprogramm 2 eine eigene Sensordatenverarbeitungsschicht in Form eines Sensorrahmenprogramms 8 vorgesehen ist, das einerseits über das Anwender-Applikationsprogramm, das die Bewegungen des Roboters steuert und andererseits über eine Einheit 11 zur ereignisgesteuerten Strategiewahl aufgrund von auftretenden Zuständen und Signalen beeinflussbar ist. Anwender-Applikationsprogramme, ereignisgesteuerte Strategieauswahlen 11 und Sensorprogramme im Sensor-Rahmenprogramm 8 sind vom Anwender 5 programmierbar.

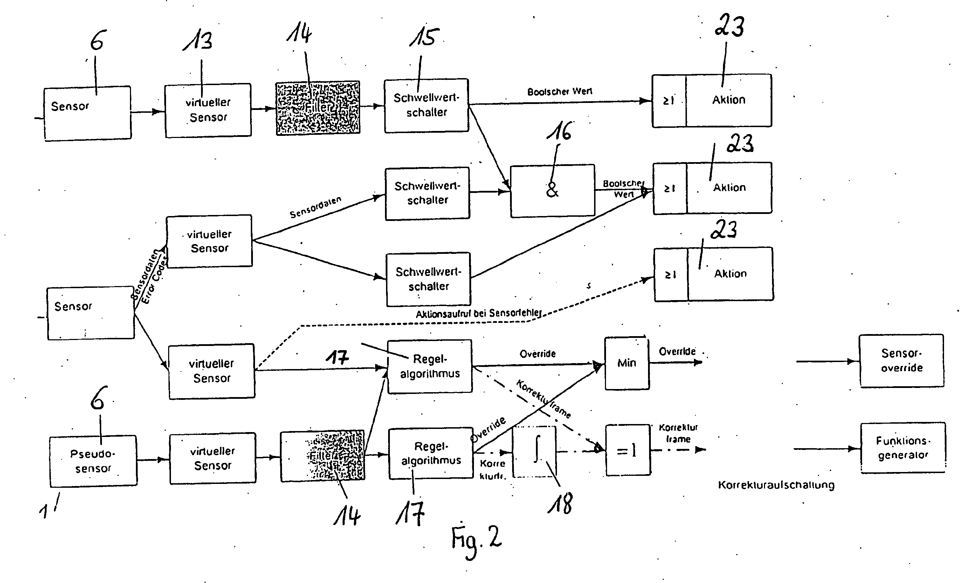

Der Arbeitsablauf der erfindungsgemäßen Steuerung für einen Roboter ist in der Fig. 2 dargestellt.

Die erfindungsgemäße Steuerung 1 weist, wie gesagt, zunächst Sensoren 6 unterschiedlicher Art auf, die Daten eigener unterschiedlicher Datenstruktur ausgeben. Die Sensordaten können gegebenenfalls zunächst normiert werden. Zu den Daten liefernden Sensoren 6 können auch Pseudosensoren 6' gehören, die keine echten gemessenen Sensordaten übergeben, sondern Systemdaten der Robotersteuerung selbst, die dem Format von Sensordaten entsprechen und die analog zu den Sensordaten zur weiteren Verwendung in der Steuerung zur Verfügung gestellt werden.

Den Sensoren 6 folgen die eigentlichen Konvertierungseinrichtungen 13, die auch als "virtuelle Sensoren" bezeichnet werden können, da das Steuerprogramm des Roboters von den Konvertierungseinrichtungen an ihm übergebene Daten als ihm angemessene Sensordaten sieht, also nur die Konvertierungseinrichtung als ihm vorgeschaltetenvirtuellen - Sensor sieht.

Die erfindungsgemäß vorgesehene Konvertierungseinrichtung 13 liest Sensordaten und Fehlercodes ein. Die Konvertierungseinrichtung 13 beinhaltet eine Umrechnungseinheit, wie beispielsweise eine Einheit zur Koordinatentransformation. Es werden auch verschiedene Eingangssensorwerte verknüpft, gegebenenfalls zu einem Ergebnis, das nur aus einem Wert besteht, welches in einer Anpassungseinheit mit einem vorwählbaren Wert multipliziert oder additiv mit einem Offset versehen werden kann. Der Ausgangswert wird dann dem Steuerungsprogramm zur weiteren Nutzung übergeben. Eine Prüfeinrichtung zur Überprüfung der Fehlercodes kann eine definierte Aktion in einem Fehlerfall veranlassen.

Den Konvertierungseinrichtungen 13 können Filter 14 nachgeschaltet sein. Die Ausgangsdaten der Konvertierungseinrichtungen 13 können in einer ersten Alternative über einen Schwellwertschalter 15 als Boolscher Wert dem Steuerprogramm zugeführt werden. Der Schwellwertschalter 15 arbeitet mit den Daten, die ihm von der Konvertierungseinrichtung geliefert werden. Durch den Schwellwertschalter 15 wird eine Bedingung - größer als, kleiner als - definiert, die von ihm fortlaufend überprüft wird, wobei der Vergleichswert der Bedingung veränderbar ist, um die Empfindlichkeit einfach variieren zu können. Ein Schwellwertschalter besitzt dabei nur einen Eingang. Das Ausgangssignal des Schwellwertschalters bestimmt, ob vom Steuerungsprogramm ein Steuerungsvorgang oder eine Aktion ausgeführt wird.

In zusätzlicher bzw. in alternativer Weise können Ausgangswerte von Schwellwertschaltern durch eine Verknüpfungseinheit 16 miteinander verknüpft werden. Derart können komplexe Schaltbedingungen geschaffen werden. Während die Verknüpfungseinheit 16 eingangsseitig mit mehreren Schaltern oder auch vorangehenden Verknüpfungen verbunden ist, können sie ausgangsseitig mit einem Steuervorgang oder aber auch Verknüpfungen versehen sein. Eine Verknüpfungseinheit 16 kann auch mit sich selbst verbunden sein. Die Verknüpfungseinheit enthält in der Regel eine feste Verknüpfung, die taktweise ausgewertet wird und deren Ergebnis den nachfolgenden Elementen zur Verfügung gestellt wird.

Weiterhin können im Rahmen der erfindungsgemäßen Steuerung Reglereinrichtungen 17 vorgesehen sein; diese nehmen Daten von ein oder mehreren Konvertierungseinrichtungen 13 entgegen, aus denen ein Korrektur Offset und/oder Override zur Korrektur einer Position (Offset) bzw. zur multiplikativen Beeinflussung der Verfahrgeschwindigkeit des Roboters (Oberride) bestimmt wird. Es können mehrere Regler 17 vorgesehen sein. Einem Regler 17 kann ein Integrator 18 nachgeordnet sein, der die vom Regler 17 erhaltenen Korrekturframes integriert. Die Ausgangswerte des Reglers 17 werden wiederum direkt oder dem indirekt über den Integrator 18 zur Ausführung von Steuerungsfunktionen durch das Steuerungsprogramm übernommen. Dieses definiert die eigentliche Funktion, die vom Roboter 3 ausgeführt wird. Dies kann vom Stoppen des Roboters bis zum Setzen eines Ausgangs reichen.

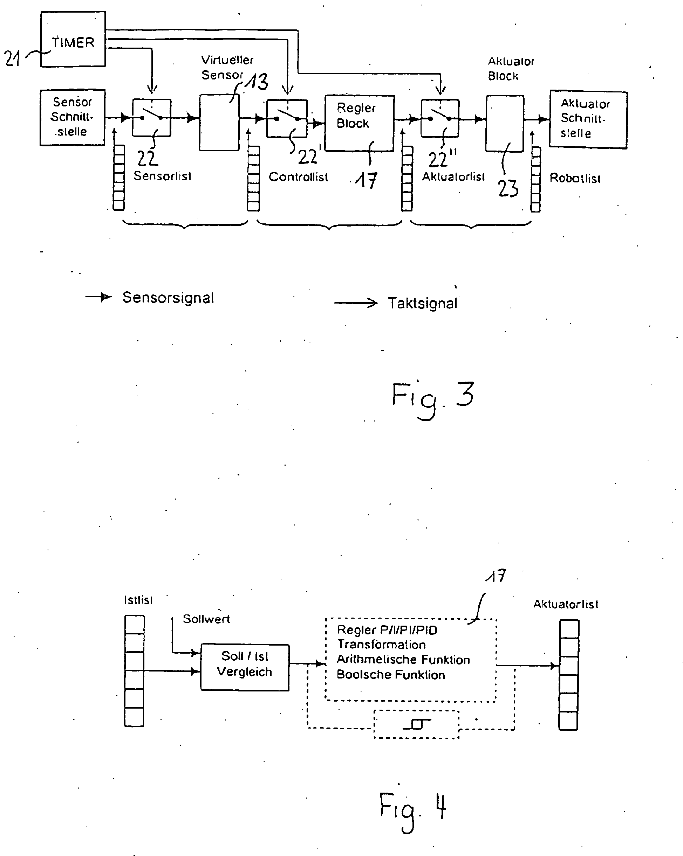

Der Ablauf des erfindungsgemäßen Verfahrens ist anhand eines Verarbeitungspfades in der Fig. 3 dargestellt. Die Verarbeitung wird gesteuert durch einen Zeitgeber 21 oder Timer, der die Zeitpunkte zur Übernahme der Daten durch einen Takt vorgibt, was in der Fig. 3 durch die Schalter 22, 22', 22" repräsentiert ist. Die Übernahme der Daten kann auch durch externe Ereignisse ausgelöst werden.

Die von dem Sensor in der "Sensorlist" zur Verfügung gestellten Daten werden in einer Konvertierungseinrichtung 13, dem "virtuellen Sensor" vereinheitlicht. Dieser weist hierzu Funktionsbausteine auf, die durch Anwenderprogrammierung netzartig verknüpfbar sind. Die Funktionen können Operatoren, wie die der Grundrechnungsarten, Quadrieren und Wurzelziehen sowie Boolsche Operatoren, darüber hinaus Filter, wie Hoch-, Tief-, und Bandpassfilter, Mittelwertbildung, sowie schließlich Transformationen zur Framearithmetik und Matrixmultiplikation enthalten. Der virtuelle Sensor 13 stellt die aufbereiteten Sensordaten als Kontrolldaten in einer Kontrollliste bereit. Diese beinhaltet eine Datenstruktur mit "Type" zur Beschreibung der Herkunft des Sensorsignals und Identifizierung des Sensortyps "Dimension" zur Angabe der Einheit des Signals in SI-Einheiten (z.B. Nm); "Dimfactor", mit dem der Signalwert multipliziert wird, um den Signalwert in der gewünschten SI-Einheit zu erhalten, "Value" als eigentlichen Sensorwert, "Time" zur Definition des Zeitpunkts der Signalgenerierung im Sensor (Zeitstempel) und "Enabled" zur Bestimmung, ob der zugehörige Wert (Value) weiterverarbeitet wird oder nicht. Soweit zur Verarbeitung steuerungsinterne Daten gebraucht werden, werden diese analog zu den Sensordaten als Daten von Pseudosensoren dargestellt.

Die Kontrolldaten der Controllist werden ebenfalls getaktet verarbeitet, wobei der Takt des Schalters 22' von dem des Schalters 22 (und dem des Schalters 22'') abweichen kann und von der Reglereinrichtung 17 übernommen werden kann. Diese kann Funktionsblöcke zur Realisierung von Boolschen Operationen (AND, OR, XOR, NOT), Regelungsfunktionen, wie 2-Punkt und 3-Punkt Regler, P-Regler, Integratoren, PID-Regler, weiterhin Vergleichs- und Schaltfunktionen wie Komparatoren mit oder ohne Hysterese sowie weitere Funktionen zur Verzögerung, Begrenzung, Integration, Differentiation und nichtlineare Kennlinien aufweisen.

Die Regeleinrichtung 17 in ihren Ablauf der Signalverarbeitung mit beispielhafter Angabe der Funktionsblöcke ist in Fig. 4 dargestellt. Dem eigentlichen Regelvorgang ist dabei ein Soll-Ist-Vergleich vorgeschaltet.

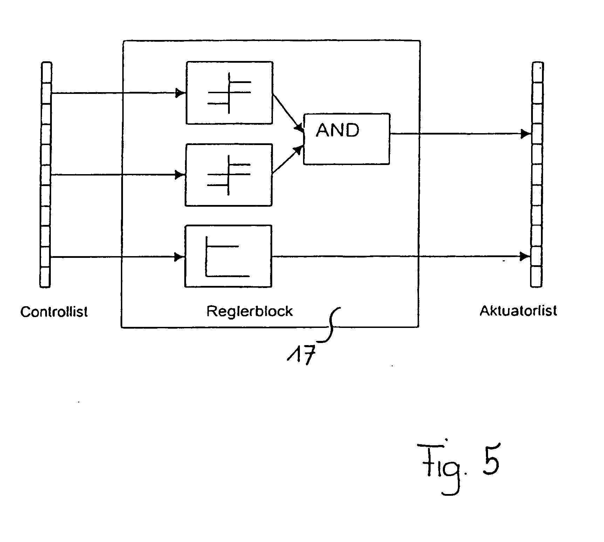

Eine konkrete Ausgestaltung der Verarbeitung in der Regeleinrichtung ist in Fig. 5 dargestellt.

Die Werte oder Daten der Regeleinrichtung 17 werden als Ergebniswerte in einer Aktuatorliste einer Aktuatoreinheit 23 zur Verfügung gestellt, die die in der Aktuatorliste bereitgestellten Resultatwerte der Reglereinrichtung 17 zu festgelegten Zeitpunkten liest, die Daten einer Überprüfung des Wertebereichs im Sinne einer Plausibilitätsprüfung und, soweit erfoderlich, einer Umrechnung und gegebenenfalls Begrenzung unterzieht und schliesslich an das eigene Steuer- oder Systemprogramm 2 des Roboters 3 in Form einer Robotlist zur Bewirkung von Steuerungsaktionen des Roboters übergibt. Diese Steuerungsaktionen können beinhalten: eine Ablaufsteuerung des Roboters mit Start oder Stop, Verzweigungen im Programmablauf sowie die Anwahl und Start bestimmter Programmkomponenten, Bewegungssteuerungen wie Positinsoffset, Krafteinprägung oder Override, und schliesslich ein allgemeines Datenmanagement zum Aktualisieren von Variablen.

Wie schon aus der Fig. 2 ersichtlich war kann ein paralleler Betrieb der Daten mehrerer Sensoren, wobei diese gleich oder unterschiedlich ausgestaltet sein können, durchgeführt werden. Darüber hinaus kann, wie durch die Verzweigungen der Fig. 2 ebenfalls ersichtlich, die Auswertung der Daten eines Sensors in mehreren Auswertestrategien erfolgen, wobei je nach auftretenden Ereignissen des Programmablaufs, der Werte von Variablen oder Schnittstellendaten, der eine oder andere Signalverarbeitungspfad aktiviert und die nicht benutzten deaktiviert werden. Auswertestrategien können kombiniert, weiterhin kann eine Fehlerbehandlung durchgeführt werden.

Insgesamt ergibt sich so ein erfindungsgemässer Verfahrensablauf bei dem zunächst Daten der Sensoren 6 ausgelesen, gegebenenfalls auch des Pseudosensors 6' übernommen werden, und diese dann konvertiert werden. Die vereinheitlichten Daten werden dann weiterverarbeitet, indem überprüft wird, ob sie vorgegebene Schwellwerte überschreiten oder unterschreiten, sie miteinander verknüpft oder einem Regelungsvorgang unterworfen werden, wobei dies vom Anwender in einfacher Weise jeweils in Anpassung an den oder die vorgesehenen Sensoren programmierbar ist, ohne dass ins eigentliche Robotersteuerprogramm eingegriffen wird. Aufgrund der Daten, die das Steuerungsprogramm aus der Roboterliste übernimmt, werden von diesem gegebenenfalls geeignete Steuerungsoperationen für den Roboter bewirkt.

Durch die Erfindung ist es bei Implementierung von sensorspezifischen Programmkarteien nicht mehr notwendig Funktions- und Sicherheitstest der eigentlichen Steuersoftware durchzuführen. Programmiermängel, in die Sensoranpassung betreffenden, Programmteilen führen zwar unter Umständen zu falschem Verhalten, aber nicht zu Sicherheitsrisiken, da in das eigentliche Steuer- oder Systemprogramm des Roboters nicht eingegriffen wird und im übrigen in der beschriebenen Weise fertig getestete Module mit vollständiger Fehlerbehandlung eingesetzt werden können. Die Programmierung der Aufgaben im Sensor-Rahmenprogramm und der Strategieauswahl kann sowohl mit Bedienerführung als auch in einem Expertenmodus erfolgen. Im ersten Falle kann ein Anwender ohne einschlägige EDV- und Programmierkenntnisse die Programmierung der Sensordatenauswertung unter Einbringung seiner Kenntnisse des auszuführenden Arbeitsprozesses durchführen, wobei er in diesem Anwendermodus Formulare zur Einbindung von Funktionsmodulen nutzen kann und zur Eingabe der erforderlichen Parameter in vorgegebenen Eingabefeldern aufgefordert wird, wobei gleichzeitig der Wertebereich überwacht und eine Plausibilitätsprüfung durchgeführt wird. Die Integrität der Sicherheitsfunktionen der Steuer- oder Systemsoftware des Roboters bleibt in jedem Falle erhalten.

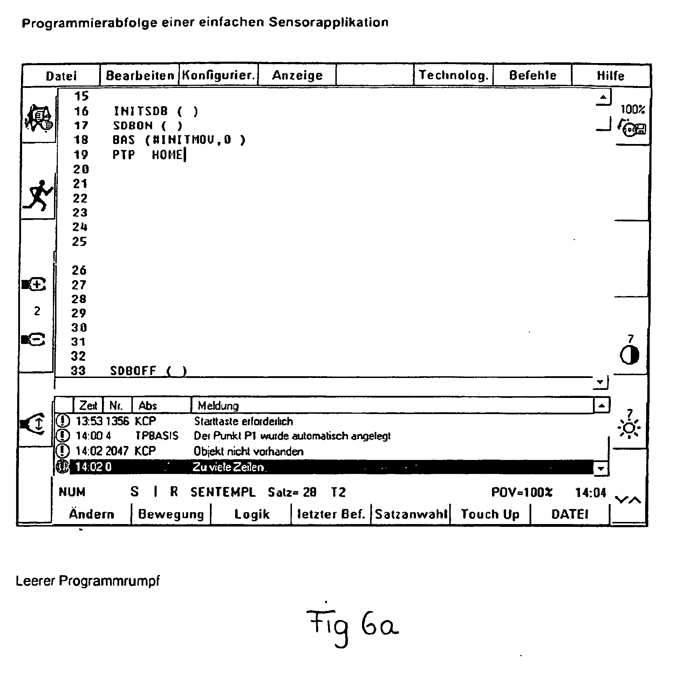

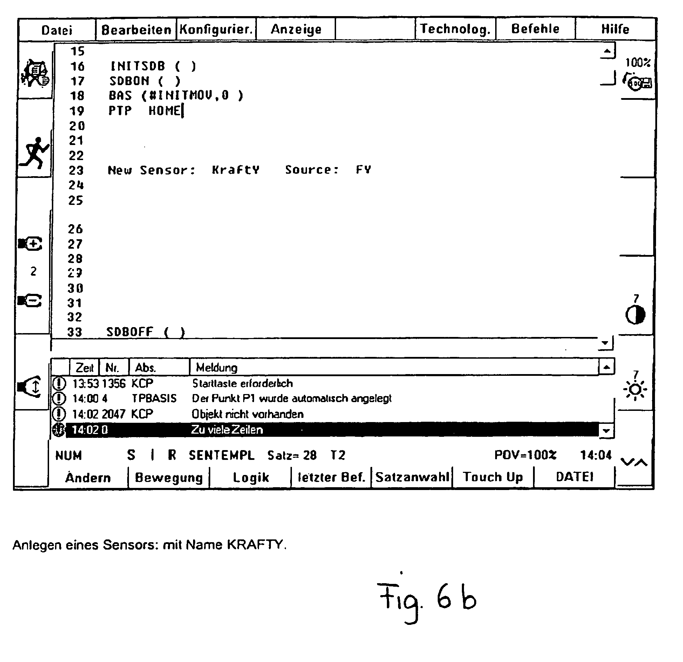

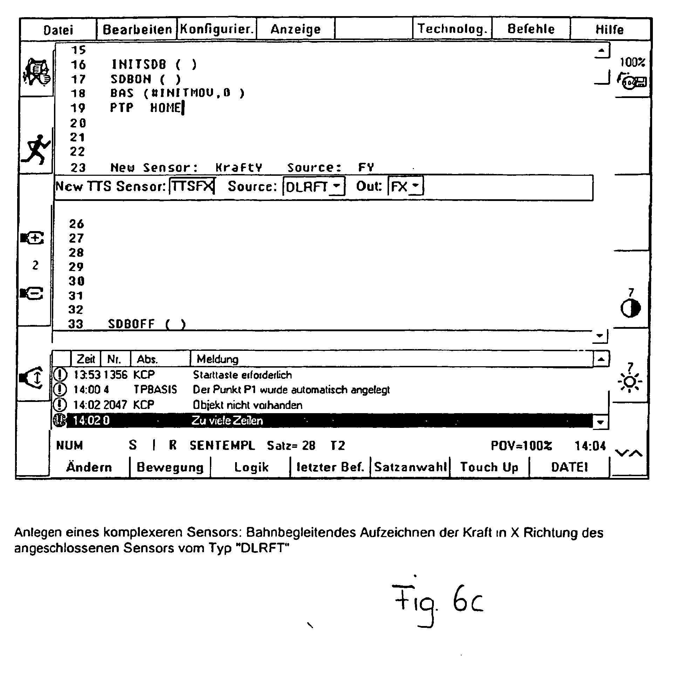

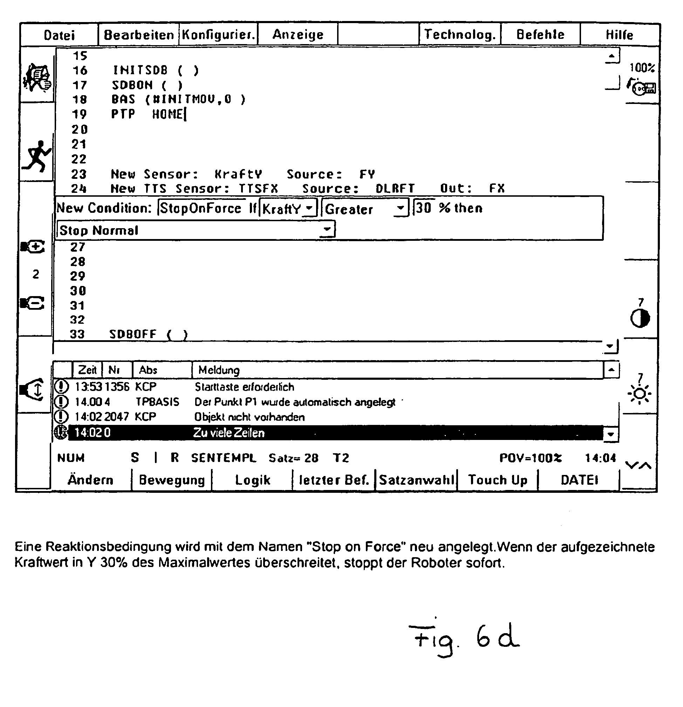

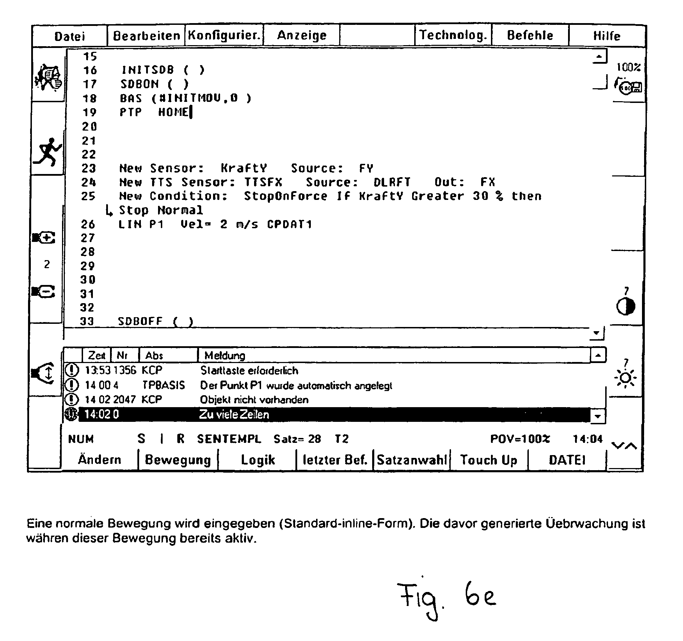

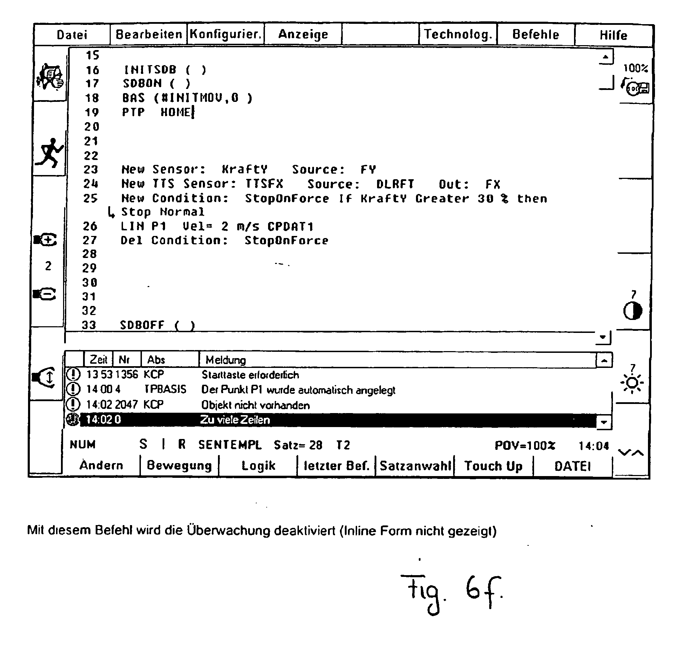

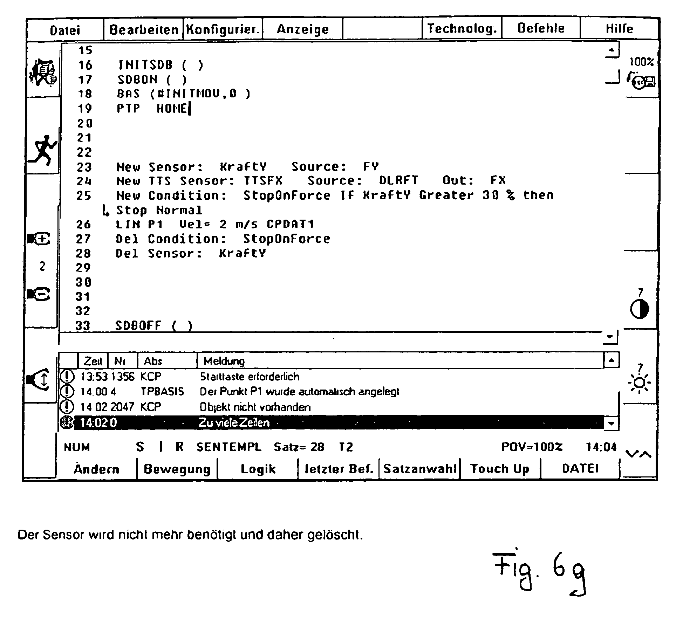

Die Figuren 6 bis 8 betreffen einen virtuellen Sensor für eine einfache Anwendung, nämlich die Verfolgung einer Kante, deren Lage und Richtung bekannt ist mit automatischem Stop bei einem unerwarteten Hindernis. Hierzu muß ein Kraftsensor angelegt werden, der drei Kräfte in einem kathesischen Koordinatensystem mißt. Dabei hat eine Transformation der Kräfte in eine Kraft in Bewegungsrichtung des Roboters durch einen virtuellen Sensor zu erfolgen. Bei dem Auftreffen des realen Sensor auf eine Kante muß ein Anhalten desselben erfolgen und ein weiteres Verfahren in der ungefähren Kantenrichtung. Zur Verfolgung der Kante ist eine Transformation der Kräfte in einen Kraft quer zur Bewegungsrichtung des Roboters durch eine virtuellen Sensor vorzunehmen, wobei die Querkraft zur Nachführung des Roboters an der Kante durch einen Regelalgorithmus verwendet wird.

In der Fig. 6a ist zunächst ein leerer Programmrumpf dargestellt. Der Benutzer wählt zunächst die zu verwendende Technologie über den Auswahlknopf "Technolog" an der oberen Kante des Bildschirms, woraufhin ihm eine Reihe von Funktionen unter dieser Technologie angeboten werden. Hieraus wählt er einen neuen Sensor, dem er den Namen KraftY gibt (Fig. 6b). In der Fig. 6c ist das Anlegen eines Sensors dargestellt, der ein bahnbegleitendes Aufzeichnen der Kraft in Y-Richtung des angeschlossenen Sensors vom Typ DLRFT beinhaltet. Im folgenden ist dargestellt, wie eine Reaktionsbedingung mit dem Rahmen "Stop on force" neu angelegt wird. Wenn der aufgezeichnete Kraftwert in Y-Richtung 30 % des Maximalwerts überschreitet, stoppt der Roboter sofort. Aus der Fig. 6d ist entnehmbar, daß im Rahmen der Inline-Formulare dem Benutzer eine Reihe von Möglichkeiten durch Anklicken der in der zur Bearbeitung anstehenden Inline-Maske angeboten werden, so der Prozentsatz, bei dessen Überschreiten des Maximalwerts eine Funktion ausgeübt wird und die Art der Funktion, wobei hier das normale Anhalten (Stop Normal) ausgewählt ist. Die Fig. 6e zeigt das Eingeben einer normalen Bewegung, wobei die davor generierte Überwachung während dieser Bewegung bereits aktiv ist. Im weiteren (Fig. 6f) kann die Überwachung durch den Befehl "DEL Condition: Stop on force" deaktiviert werden, wobei das Inline-Formular, über welche die Deaktivierung angewählt wird, selbst nicht dargestellt ist. Mit dem in Fig. 6d dargestellten Befehl "Delete Sensor: KraftY" wird der Sensor, wenn er nicht mehr benötigt wird, gelöscht.

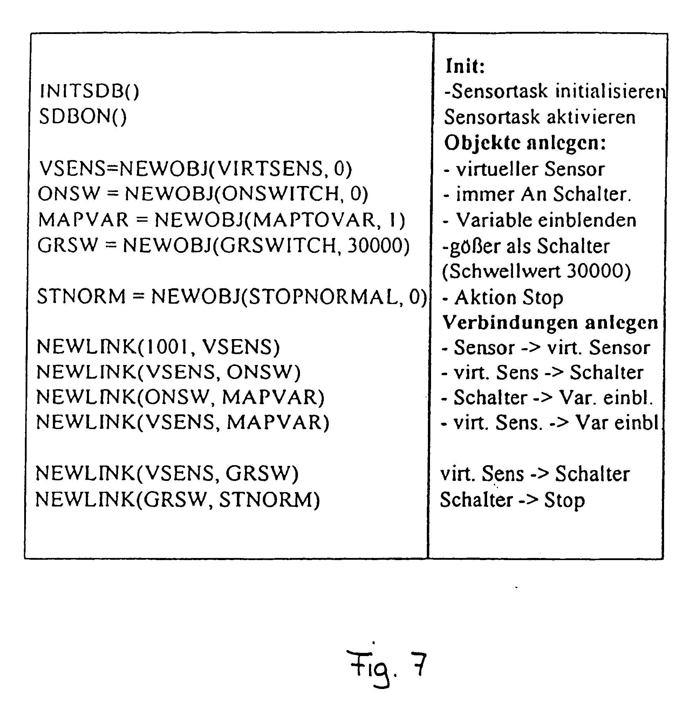

Die Fig. 7 zeigt einen in dieser Weise oder aber durch direkte Eingabe eines Experten das eingegebene Quellcode mit der Angabe der Funktionen in den einzelnen Zeilen des Quellcodesprogramms.

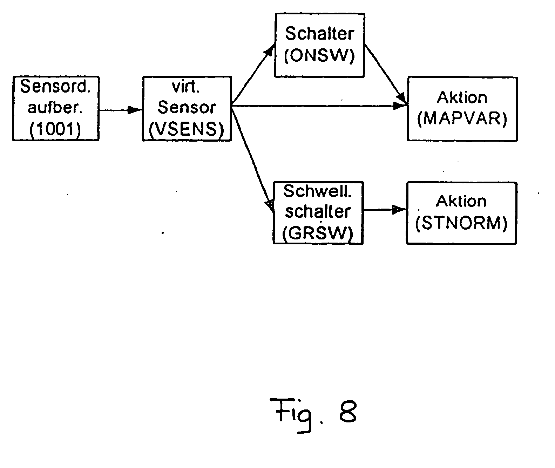

Die Fig. 8 stellt die durch das Programm angelegte Struktur im Systemprogramm dar.

## Patentansprüche

1. Verfahren zum Steuern eines Roboters (3) aufgrund von Sensordaten von Sensoren (6), wobei die Sensordaten, vor Übergabe an ein Steuerungsprogramm (2) für den Roboter in Robotersteuerdaten des von dem Steuerungsprogramm verwendeten Steuerdatenstruktur, in Kontrolldaten einheitlicher Datenstruktur konvertiert werden, dass sie vom Steuerungsprogramm ohne weiteres weiterverarbeitet werden können, **dadurch gekennzeichnet, daß** die gemäß einer bestimmten Auswertestrategie gewonnenen Daten in Abhängigkeit bestimmter Ereignisse zum Einsatz an das Steuerprogramm übergeben und als Robotersteuerdaten an das Steuerungsprogramm von diesem weiterverarbeitet werden.

2. Verfahren nach Anspruch 1, **dadurch gekennzeichnet, dass** interne Daten der Robotersteuerung in Kontrolldaten mit einer einheitlichen Datenstruktur konvertiert werden.

3. Verfahren nach Anspruch 1 oder 2, **dadurch gekennzeichnet, dass** die Kontrolldaten durch geeignete Verarbeitungsoperationen zu Aktuatordaten verarbeitet werden.

4. Verfahren nach Anspruch 3', **dadurch gekennzeichnet, dass** die Aktuatordaten überprüft, gegebenenfalls begrenzt werden und als Robotersteuerdaten an das Steuerprogramm des Roboters übergeben werden.

5. Verfahren nach einem der vorangehenden Ansprüche, **dadurch gekennzeichnet, dass** Sensor-, Kontroll-, Aktuator- und/oder Robotersteuerdaten mit unterschiedlichen Takten verarbeitet werden.

6. Verfahren nach Anspruch 5, **dadurch gekennzeichnet, dass** bei der Bearbeitung der Sensor-, Kontroll-, Aktuator- und/oder Robotersteuerdaten eine Mittelung und/oder Filterung durchgeführt wird.

7. Verfahren nach einem der vorangehenden Ansprüche, **dadurch gekennzeichnet, dass** Sensordaten mehrerer Sensoren parallel verarbeitet werden.

8. Verfahren nach einem der vorangehenden Ansprüche, **dadurch gekennzeichnet, dass** Daten eines Sensors parallel mittels unterschiedlicher Auswertestrategien ausgewertet werden.

9. Vorrichtung zum Steuern eines Roboters (3) aufgrund von Sensoren (6), mit einem Steuerungsprogramm (2) für den Roboter (3), wobei zwischen Sensortreibern (7) und dem Steuerungsprogramm (2) eine Bearbeitungseinrichtung (8) zur Konvertierung der Sensordaten vor Übergabe an das Steuerungsprogramm (2) für den Roboter derart in Robotersteuerdaten einheitlicher, vom Steuerungsprogramm verwendeter Datenstruktur angeordnet ist, dass die Robotersteuerdaten vom Steuerungsprogramm (2) ohne weiteres weiterverarbeitbar sind, **gekennzeichnet durch** eine Schalteinrichtung (15) zur Aktivierung bzw. Deaktivierung von Sensor-Verarbeitungspfaden in Abhängigkeit von einer oder mehreren Bedingungen.

10. Vorrichtung nach Anspruch 9, **dadurch gekennzeichnet, dass** Einrichtungen zur Konvertierung interner Daten der Robotersteuerung in Kontrolldaten mit einer einheitlichen Datenstruktur vorgesehen ist.

11. Vorrichtung nach Anspruch 9 oder 10, **dadurch gekennzeichnet, dass** eine Reglereinrichtung zur Verarbeitung der Kontrolldaten durch geeignete Verarbeitungsoperationen zu Aktuatordaten vorgesehen ist.

12. Vorrichtung nach Anspruch 11, **dadurch gekennzeichnet, dass** eine Aktuatoreinrichtung zum Überprüfen der Aktuatordaten, gegebenenfalls zum Begrenzen derselben und zum Übergeben als Robotersteuerdaten an das Steuerprogramm des Roboters vorgesehen ist.

13. Vorrichtung nach einem der Ansprüche 9 bis 12, **dadurch gekennzeichnet, dass** Taktgeber mit voneinander unabhängigen Ausgangstakten für die einzelnen Verarbeitungseinrichtungen vorgesehen sind.

14. Vorrichtung nach einem der Ansprüche 9 bis 13, **gekennzeichnet durch** Einrichtungen zur Mittelung und/oder Filterung der Sensor-, Kontroll-, Aktuator- und/oder Robotersteuerdaten.

15. Vorrichtung nach Anspruch 14, **gekennzeichnet durch** Ausgestaltung der genannten Einrichtungen zur Verarbeitung von Sensor-, Kontroll-, Aktuator- und/oder Robotersteuerdaten mit unterschiedlichen Takten.

16. Vorrichtung nach einem der Ansprüche 9 bis 15, **dadurch gekennzeichnet, dass** mehrere Verarbeitungspfade zur parallelen Verarbeitung von Sensordaten mehrerer Sensoren vorgesehen sind.

17. Vorrichtung nach einem der Ansprüche 9 bis 16, **dadurch gekennzeichnet, dass** mehrere Verarbeitungspfade zur parallelen Verarbeitung von Sensordaten eines Sensors mittels unterschiedlicher Auswertestrategien vorgesehen sind.

18. Vorrichtung nach einem Ansprüche 9 bis 17, **gekennzeichnet durch** hierarchisch aufgebaute Steuerungsmodule.

19. Vorrichtung nach einem der Ansprüche 9 bis 18, **gekennzeichnet durch** eine hierarchisch und modular aufgebaute Bedienoberfläche.

20. Vorrichtung nach Anspruch 18 oder 19, **gekennzeichnet durch** eine Ebene von Modulen zur Auswahl von Art eines virtuellen Sensors.

21. Vorrichtung nach einem der Ansprüche 18 oder 20, **dadurch gekennzeichnet, dass** Module vorgesehen sind, die durch einen virtuellen Sensor zu überwachenden Aktionen beinhalten.

22. Vorrichtung nach einem der Ansprüche 20 bis 21, **gekennzeichnet durch** Module zum Festlegen die Aktionen bewirkender Parameter.

## Claims

1. A method for controlling a robot (3) on the basis of sensor data from sensors (6), the sensor data, before transfer to a control program (2) for the robot as robot control data of the control data structure used by the control program, being converted into check data of uniform data structure, such that they may be straightforwardly further processed by the control program, **characterised in that** the data obtained according to a particular evaluation strategy are transferred for use to the control program as a function of particular events and, as robot control data to the control program, are further processed thereby.

2. A method according to claim 1, **characterised in that** internal data of the robot controller are converted into check data with a uniform data structure.

3. A method according to claim 1 or claim 2, **characterised in that** the check data are processed into actuator data by suitable processing operations.

4. A method according to claim 3, **characterised in that** the actuator data are checked, optionally limited and transferred as robot control data to the control program of the robot.

5. A method according to any one of the preceding claims, **characterised in that** sensor, check, actuator and/or robot control data are processed with different clock pulses.

6. A method according to claim 5, **characterised in that**, when processing the sensor, check, actuator and/or robot control data, averaging and/or filtering is performed.

7. A method according to any one of the preceding claims, **characterised in that** sensor data from a plurality of sensors are processed in parallel.

8. A method according to any one of the preceding claims, **characterised in that** data from a sensor are evaluated in parallel using different evaluation strategies.

9. A device for controlling a robot (3) on the basis of sensors (6), with a control program (2) for the robot (3), a processing means (8) being arranged between sensor drivers (7) and the control program (2) for converting the sensor data, prior to transfer to the control program (2) for the robot, into robot control data of a uniform data structure used by the control program, in such a way that the robot control data may be straightforwardly further processed by the control program (2), **characterised by** a switching means (15) for activating and/or deactivating sensor processing paths as a function of one or more conditions.

10. A device according to claim 9, **characterised in that** means are provided for converting internal data of the robot controller into check data with a uniform data structure.

11. A device according to claim 9 or claim 10, **characterised in that** a regulator is provided for processing the check data into actuator data by suitable processing operations.

12. A device according to claim 11, **characterised in that** an actuator means is provided for checking the actuator data, optionally for limiting them and for transferring them as robot control data to the control program of the robot.

13. A device according to any one of claims 9 to 12, **characterised in that** clock generators are provided, with mutually independent output clock pulses for the individual processing means.

14. A device according to any one of claims 9 to 13, **characterised by** means for averaging and/or filtering the sensor, check, actuator and/or robot control data.

15. A device according to claim 14, **characterised by** configuration of the stated means for processing sensor, check, actuator and/or robot control data with different clock pulses.

16. A device according to any one of claims 9 to 15, **characterised in that** a plurality of processing paths are provided for parallel processing of sensor data from a plurality of sensors.

17. A device according to any one of claims 9 to 16, **characterised in that** a plurality of processing paths are provided for parallel processing of sensor data from a sensor by means of different evaluation strategies.

18. A device according to any one of claims 9 to 17, **characterised by** control modules of hierarchical structure.

19. A device according to any one of claims 9 to 18, **characterised by** an operator interface of hierarchical and modular structure.

20. A device according to claim 18 or claim 19, **characterised by** a plane of modules for selection of the virtual sensor type.

21. A device according to either one of claims 18 or 20, **characterised in that** modules are provided which contain actions to be monitored by a virtual sensor.

22. A device according to either one of claims 20 to 21, **characterised by** modules for defining parameters effecting the actions.

## Revendications

1. Procédé de commande de robot (3) à l'aide de données de capteur recueillies par des capteurs (6), les données de capteur étant converties en données de contrôle d'une structure de données unifiée, avant transmission à un programme de commande (2) prévu pour le robot dans les données de commande de robot de la structure de données de commande utilisée par le programme de commande, lesdites données pouvant être traitées telles quelles par le programme de commande, **caractérisé en ce que** les données recueillies selon une stratégie d'analyse donnée peuvent être transmises par la suite en fonction de résultats donnés pour être utilisées dans le programme de commande et être transmises par la suite sous la forme de données de commande de robot au programme de commande de celui-ci.

2. Procédé selon la revendication 1, **caractérisé en ce que** les données internes du dispositif de commande de robot peuvent être converties en données de contrôle présentant une structure de données unifiée.

3. Procédé selon la revendication 1 ou 2, **caractérisé en ce que** les données de contrôle sont traitées au moyen d'opérations de traitement adaptées pour être transformées en données d'actionneur.

4. Procédé selon la revendication 3, **caractérisé en ce que** les données d'actionneur sont vérifiées, le cas échéant délimitées et transmises au programme de commande du robot sous la forme de données de commande de robot.

5. Procédé selon l'une quelconque des revendications précédentes, **caractérisé en ce que** les données de capteur, de contrôle, d'actionneur et/ou de dispositif de commande de robot sont traitées à une cadence différente.

6. Procédé selon la revendication 5, **caractérisé en ce qu'**une moyenne et/ou un filtrage sont réalisés lors du traitement des données de capteur, de contrôle, d'actionneur et/ou de dispositif de commande de robot.

7. Procédé selon l'une quelconque des revendications précédentes, **caractérisé en ce que** les données de capteur de plusieurs capteurs sont traitées en parallèle.

8. Procédé selon l'une quelconque des revendications précédentes, **caractérisé en ce que** les données d'un capteur sont analysées en parallèle à l'aide de différentes stratégies d'analyse.

9. Dispositif de commande d'un robot (3) à l'aide de capteurs (6), avec un programme de commande (2) pour le robot (3), un dispositif de traitement (8) étant disposé entre les pilotes de capteur (7) et le programme de commande (2) pour la conversion des données de capteur en données de contrôle de robot d'une structure de données unifiée utilisée par le programme de commande, avant transmission au programme de commande (2) prévu pour le robot, de telle sorte que les données de commande de robot peuvent être traitées telles quelles par la suite par le programme de commande (2), **caractérisé par** un dispositif de commutation (15) servant à activer et/ou désactiver des chemins de traitement de capteur en fonction d'une ou de plusieurs conditions.

10. Dispositif selon la revendication 9, **caractérisé en ce que** des dispositifs de conversion de données internes de la commande du robot en données de contrôle offrant une structure de données unifiée sont prévus.

11. Dispositif selon la revendication.9 ou 10, **caractérisé en ce qu'**un dispositif de régulation est prévu pour traiter les données de contrôle au moyen d'opérations de traitement adaptées pour en faire des données d'actionneur.

12. Dispositif selon la revendication 11, **caractérisé en ce qu'**un dispositif d'actionneur est prévu pour vérifier les données d'actionneur, le cas échéant pour les délimiter et pour les transmettre au programme de commande du robot sous la forme de données de commande de robot.

13. Dispositif selon l'une quelconque des revendications 9 à 12, **caractérisé en ce que** des dispositifs de cadencement sont prévus avec des moments de départ indépendants les uns des autres pour les différents dispositifs de traitement.

14. Dispositif selon l'une quelconque des revendications 9 à 13, **caractérisé par** des dispositifs permettant de réaliser une moyenne et/ou de filtrer les données de capteur, de contrôle, d'actionneur et/ou de dispositif de commande de robot.

15. Dispositif selon la revendication 14, **caractérisé par** la configuration desdits dispositifs de traitement de données de capteur, de contrôle, d'actionneur, de dispositif de commande de robot à une cadence différente.

16. Dispositif selon l'une quelconque des revendications 9 à 15, **caractérisé en ce que** plusieurs chemins de traitement sont prévus pour le traitement parallèle des données de capteur provenant de plusieurs capteurs.

17. Dispositif selon l'une quelconque des revendications 9 à 16, **caractérisé en ce que** plusieurs chemins de traitement sont prévus pour le traitement parallèle des données de capteur d'un capteur à l'aide de différentes stratégies d'analyse.

18. Dispositif selon l'une quelconque des revendications 9 à 17, **caractérisé par** un module de commande hiérarchisé.

19. Dispositif selon l'une quelconque des revendications 9 à 18, **caractérisé par** une surface d'utilisation hiérarchisée et modulaire.

20. Dispositif selon la revendication 18 ou 19, **caractérisé par** un plan de modules permettant de choisir un type de capteur virtuel.

21. Dispositif selon l'une quelconque des revendications 18 ou 20, **caractérisé en ce que** des modules sont prévus contenant des actions à surveiller à l'aide d'un capteur virtuel.

22. Dispositif selon l'une quelconque des revendications 20 à 21, **caractérisé par** des modules permettant de déterminer les actions de paramètres actifs.
